# EUROPÄISCHE PATENTSCHRIFT

(11) **EP 1 404 049 B1**
(45) Veröffentlichungstag und Bekanntmachung des Hinweises auf die Patenterteilung: **02.11.2006**
(21) Anmeldenummer: 02021492.0
(22) Anmeldetag: 25.09.2002
(51) Int. Cl.: H04L 5/06

(54) **Übertragung von Signalen über mehrere Trägerfrequenzen mittels mehrerer Verstärker**
Signal transmission on a plurality of carriers using a plurality of amplifiers
Transmission de signaux sur une pluralité de porteuses utilisant une pluralité d'amplificateurs

(43) Veröffentlichungstag der Anmeldung: 31.03.2004
(73) Patentinhaber: SIEMENS AKTIENGESELLSCHAFT, 80333 München (DE)
(72) Erfinder: Ritter, Gerhard, 86943 Thaining (DE)

(56) Entgegenhaltungen:
- WO-A-01/43469
- US-A- 5 249 201
- US-A- 5 930 678

## Beschreibung

Die Erfindung betrifft ein Verfahren zum gleichzeitigen Übertragen von Signalen durch eine Sendeeinrichtung eines Funkkommunikationssystems über mehrere Trägerfrequenzen, ein Funkkommunikationssystem sowie eine Sendeeinrichtung für ein solches.

Entsprechende Funkkommunikationssysteme nutzen beispielsweise Frequenzmultiplex (FDMA, Frequency Division Multiple Access), um unterschiedliche Verbindungen bzw. Teilnehmer voneinander zu trennen. Jeder Verbindung ist dann eine der Trägerfrequenzen zugeordnet. Die Unterscheidung einer größeren Anzahl von Verbindungen ist möglich, wenn zusätzlich zu der FDMA-Komponente weitere Multiplexkomponenten wie beispielsweise TDMA (Time Division Multiple Access) oder CDMA (Code Division Multiple Access) zum Einsatz kommen. Beispielsweise in zellularen Mobilfunksystemen, bei denen eine Funkzelle durch jeweils eine Basisstation versorgt wird, ist es möglich, dass jede Basisstation eine Vielzahl von Trägerfrequenzen für in der Funkzelle zu unterhaltende Verbindungen zur Verfügung stellt (siehe z.B. WO-A-01/43469). Um Kosten zu sparen, ist es möglich, zum Verstärken der durch zu übertragende Signale modulierten Trägerfrequenzen einen gemeinsamen linearen Sendeverstärker zu verwenden (statt jeweils eines Verstärkers für jede Trägerfrequenz). Ein in einem breiten Frequenzbereich linearer Sendeverstärker kann jedoch, anhängig von den Systemanforderungen, sehr aufwändig und daher teuer sein. Deshalb kann es als vorteilhaft angesehen werden, kostengünstigere Verstärker einzusetzen, deren Linearität im gesamten zu verstärkenden Frequenzspektrum nicht gewährleistet ist. Dies hat wiederum zur Folge, dass bei der Verstärkung der unterschiedlichen Trägerfrequenzen störende Intermodulationsprodukte entstehen.

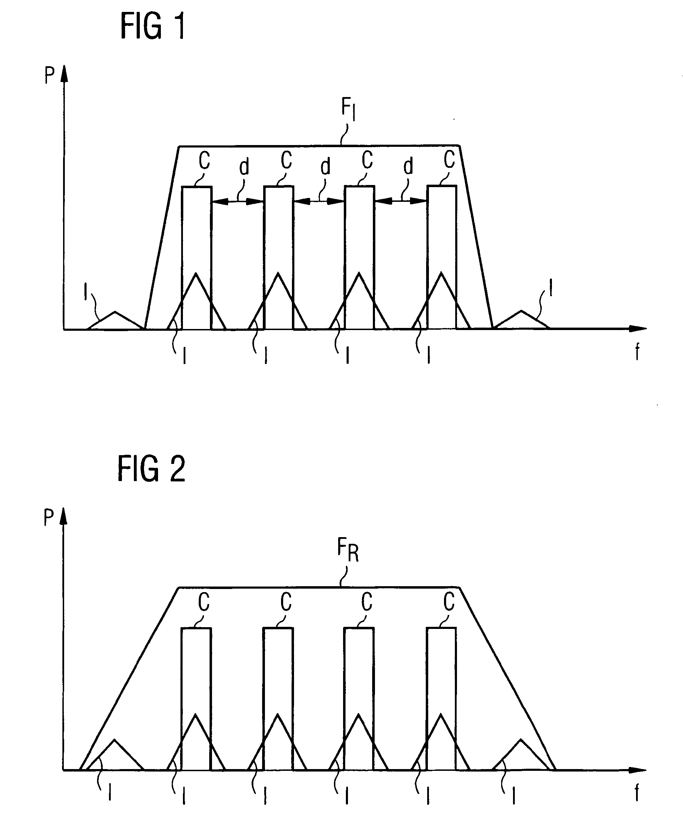

Figur 1 zeigt beispielhaft vier durch einen gemeinsamen Verstärker verstärkte Trägerfrequenzen C, deren Mittenfrequenzen jeweils einen gegenseitigen Frequenzabstand d zueinander aufweisen. In Figur 1 ist die Leistung P über der Frequenz f aufgetragen. Durch die Verwendung eines hinsichtlich seiner Linearität suboptimalen gemeinsamen Verstärkers zur Verstärkung der vier Trägerfrequenzen C sind Intermodulationsprodukte I entstanden. Da die Trägerfrequenzen C äquidistant zueinander angeordnet sind, gilt dies auch für die Intermodulationsprodukte I. Um außerhalb des für die Übertragung der Signale genutzten Frequenzspektrums eine Störung durch die Intermodulationsprodukte I möglichst gering zu halten, wird das Ausgangssignal des gemeinsamen Verstärkers durch ein Filter F_{I} gefiltert. Dabei handelt es sich um ein Bandpassfilter, dass im Folgenden als "Blockfilter" bezeichnet wird. Seine Verwendung führt dazu, dass die Intermodulationsprodukte I außerhalb des für die Signalübertragung genutzten Frequenzspektrums in ihrer Leistung P stark gedämpft werden. Innerhalb des Nutzfrequenzbereichs erfolgt dagegen keine Absenkung der Leistung P der Intermodulationsprodukte I. Dies ist jedoch nicht schädlich, da die Leistung der Trägerfrequenzen C deutlich größer ist, so dass eine Auswertung der mit den Trägerfrequenzen C übertragenen Signale durch die Intermodulationsprodukte I nicht nennenswert gestört wird. In Figur 1 wurde als Blockfilter F_{I} ein Filter mit sehr großer Flankensteilheit angenommen.

Figur 2 zeigt den Einsatz eines realen Filters F_{R} mit geringerer Flankensteilheit. In der Praxis werden derartige Filter aus Kostengründen häufig eingesetzt. Figur 2 zeigt, dass aufgrund der geringeren Flankensteilheit die Leistung P der Intermodulationsprodukte I unmittelbar neben dem durch die Trägerfrequenzen C genutzten Frequenzspektrums sehr viel größer ist, als im Falle der Figur. 1. Das bedeutet, dass in diesen Bereichen das eigentlich für die Übertragung der Trägerfrequenzen C nicht genutzte Funkspektrum in weitaus höherem Maße gestört wird, als es bei der Verwendung des steilflankigen Filters F_{I} aus Figur 1 der Fall ist. Übrigens setzen sich die Intermodulationsprodukte I in den in Figur 1 und 2 gezeigten Fällen periodisch in Richtung niedriger und höherer Frequenzen f fort. All diese Intermodulationsprodukte I sind äquidistant. Außerhalb des Durchlassbereiches der Blockfilter F_{I} bzw. F_{R} ist die Leistung P der Intermodulationsprodukte I praktisch vernachlässigbar.

Der Erfindung liegt die Aufgabe zugrunde, ein Verfahren zum Verstärken mehrerer Trägerfrequenzen anzugeben, das kostengünstig durchführbar ist und bei dem dennoch das Auftreten störender Intermodulationsprodukte außerhalb des genutzten Funkspektrums weitestgehend vermieden wird.

Diese Aufgabe wird mit einem Verfahren gemäß Anspruch 1, einem Funkkommunikationssystem gemäß Anspruch 10 sowie einer Sendeeinrichtung gemäß Anspruch 11 gelöst. Vorteilhafte Ausund Weiterbildungen der Erfindung sind Gegenstand abhängiger Ansprüche.

Das erfindungsgemäße Verfahren zum gleichzeitigen Übertragen von Signalen durch eine Sendeeinrichtung eines Funkkommunikationssystems über mehrere Trägerfrequenzen sieht vor, dass die Trägerfrequenzen durch die Signale moduliert werden. Anschließend werden Trägerfrequenzen, die frequenzmäßig zwischen einer ersten Trägerfrequenz und einer zweiten Trägerfrequenz liegen, vor ihrem Senden von einem gemeinsamen Verstärker verstärkt, dessen Ausgangssignal durch ein breitbandiges Filter in Form eines Bandpasses gefiltert wird. Die erste Trägerfrequenz und die zweite Trägerfrequenz werden vor ihrem Senden von wenigstens einem anderem Verstärker verstärkt. Die erste Trägerfrequenz ist von den hier betrachteten Trägerfrequenzen diejenige mit der niedrigsten Frequenz, während die zweite Trägerfrequenz diejenige mit der höchsten Frequenz ist. In diesem Zusammenhang bedeutet "Frequenz" entweder eine einzige Frequenz oder ein ganzes Frequenzband, das für eine Modulation durch die zu übertragenen Signale vorgesehen ist. Da erfindungsgemäß nur diejenigen Trägerfrequenzen durch den gemeinsamen Verstärker verstärkt werden, die zwischen der ersten und der zweiten Trägerfrequenz liegen, ist der Einsatz eines diesem gemeinsamen Verstärker nachgeschalteten Filters mit relativ geringer Flankensteilheit möglich, ohne dass die bei Verwendung eines gemeinsamen Verstärkers, der nicht völlig linear ist, entstehenden Intermodulationsprodukte mit störenden Leistungspegeln außerhalb des von allen Trägerfrequenzen genutzten Funkspektrums entstehen. Vielmehr liegen die aufgrund der geringen Flankensteilheit des Filters nur ungenügend gedämpften Intermodulationsprodukte im Bereich der ersten bzw. zweiten Trägerfrequenz, die aufgrund ihrer relativ größeren Leistung durch diese Intermodulationsprodukte nicht gestört werden.

Nach einer ersten Ausführungsform der Erfindung werden die erste Trägerfrequenz und die zweite Trägerfrequenz vor ihrem Senden von jeweils einem eigenen Verstärker verstärkt. Es kommen also insgesamt drei Verstärker zum Einsatz, nämlich der gemeinsame Verstärker für alle Trägerfrequenzen außer der ersten und der zweiten Trägerfrequenz sowie die jeweils eigenen Verstärker für die erste und die zweite Trägerfrequenz. Wird dann für die Modulation der Trägerfrequenzen durch die zu übertragenen Signale ein Modulationsverfahren gewählt, bei dem ausschließlich eine Modulation der Phase und keine Modulation der Amplitude erfolgt, wie es beispielsweise bei GMSK (Gaussian Minimum Shift Keying) der Fall ist, entstehen durch die separate Verstärkung der ersten bzw. der zweiten Trägerfrequenz keine weiteren Intermodulationsprodukte. In diesem Fall muss den entsprechenden Verstärkern grundsätzlich kein Filter nachgeschaltet werden.

Nach einer Weiterbildung dieser Ausführungsform der Erfindung werden die Ausgangssignale der Verstärker für die erste und die zweite Trägerfrequenz durch jeweils ein schmalbandiges Filter gefiltert. Dies ist insbesondere dann von Vorteil, wenn ein Modulationsverfahren verwendet wird, welches außer einer Modulation der Phase auch eine Modulation der Amplitude der Trägerfrequenzen durchführt. Da bei derartigen Modulationsverfahren trotz der Verstärkung lediglich einer Trägerfrequenz durch einen Verstärker ebenfalls Intermodulationsprodukte entstehen, ist die Unterdrückung dieser Intermodulationsprodukte durch ein schmalbandiges Filter vorteilhaft. Dabei können schmalbandige Filter weitaus kostengünstiger mit großer Flankensteilheit hergestellt werden, als dies bei breitbandigen Filtern der Fall ist.

Intermodulationsprodukte entstehen durch Nichtlinearitäten insbesondere in Leistungsverstärkern, welche wegen der höheren Pegel auch höher ausgesteuert werden. Nichtlinearitäten können in Abweichung vom linearen Zusammenhang zwischen der Ausgangsamplitude und der Eingangsamplitude aber auch in Phasenänderungen des Ausgangssignals bei Änderungen der Eingangsamplitude bestehen. Intermodulationsprodukte in Leistungsverstärkern können daher praktisch vermieden werden, wenn die Eingangsamplitude konstant gehalten wird und die Nichtlinearitäten nicht zum Tragen kommen. Dies ist für Modulationsverfahren erfüllt, welche nur die Frequenz oder nur die Phase modulieren. In diesem Falle sind auch höhere Aussteuerungen und höhere Wirkungsgrade erzielbar. Diese Eigenschaft war ein Grund, in der 1. Generation der Mobilfunksysteme Frequenzmodulation zu verwenden. In der 2. Generation der Mobilfunksysteme verwendet das GSM-System eine GMSK-Modulation und das DECT-System eine GFSK-Modulation, wobei beide eine konstante Amplitude aufweisen und die Phase bzw. die Frequenz moduliert wird. Andererseits besitzen z. B. BPSK-Modulation und QPSK-Modulation nicht die Eigenschaften einer konstanten Amplitude. OQPSK ist ein Ansatz, die Amplitudenschwankungen von QPSK-Modulation zu reduzieren. Weiter entstehen Amplitudenschwankungen grundsätzlich bei einer Überlagerung von zwei oder mehr Signalen. Dies gilt z. B. für zwei oder mehr Signale konstanter Amplituden (z. B. GMSK), zwei oder mehr kodierte Signale (CDMA), zwei oder mehr unmodulierte Signale (OFDM, unmoduliert während eines Symbols).

Der sogenannte Crest-Faktor gibt das Verhältnis von Amplitudenspitzen zu Mittelwert eines Signals oder Signalgemischs an. Mit zunehmenden Crest-Faktor steigen die Anforderungen an die Leistungsverstärker bzw. es entstehen verstärkt Intermodulationsprodukte.

Nach einer zweiten Ausführungsform der Erfindung werden die erste Trägerfrequenz und die zweite Trägerfrequenz vor ihrem Senden von einem gemeinsamen Verstärker verstärkt, dessen Ausgangssignal durch ein weiteres breitbandiges Filter gefiltert wird. Die Verwendung eines gemeinsamen Verstärkers zum Verstärken der ersten und der zweiten Trägerfrequenz führt wiederum zum Entstehen von Intermodulationsprodukten. Daher ist der Einsatz des weiteren breitbandigen Filters zu deren Unterdrückung notwendig. Obwohl dieses Filter breitbandiger sein muss als das breitbandige Filter, dass zum Filtern aller zwischen der ersten und der zweiten Trägerfrequenz liegenden Trägerfrequenzen verwendet wird, und daher eine große Flankensteilheit nur mit noch größerem Aufwand als bei letzteren zu erreichen wäre, ist dies nicht nachteilig. Da nämlich durch die dazwischen angeordneten übrigen Trägerfrequenzen der Bandabstand zwischen der ersten und der zweiten Trägerfrequenz relativ groß ist, gilt dies auch für den gegenseitigen Abstand der durch den gemeinsamen Verstärker für die erste und zweite Trägerfrequenz erzeugten Intermodulationsprodukte. Ihr Abstand ist so groß, dass auch bei geringer Flankensteilheit des am Ausgang dieses Verstärkers befindlichen. Filters eine Dämpfung auf systemverträgliche Werte erzielt wird.

Nach einer Weiterbildung der Erfindung sind die Trägerfrequenzen äquidistant zueinander angeordnet. Das bedeutet, dass zwischen jeweils zwei der Trägerfrequenzen derselbe Bandabstand besteht. Dies hat zur Folge, dass die durch die Verstärker erzeugten Intermodulationsprodukte unter anderem die gleichen Frequenzen aufweisen wie die Trägerfrequenzen selbst. Hierdurch kommt es aufgrund der relativ höheren Leistung der Trägerfrequenzen gewissermaßen zu einer "Maskierung" der Intermodulationsprodukte durch die Trägerfrequenzen.

Nach einer Weiterbildung der Erfindung weist die Sendeeinrichtung eine ersten Sendestation und eine zweite Sendestation mit jeweils separaten Sendeantennen auf. Die erste Sendestation erzeugt und moduliert die erste und die zweite Trägerfrequenz, verstärkt diese und sendet diese (gegebenenfalls gefiltert) über ihre Antenne aus. Die zweite Sendestation erzeugt, moduliert, verstärkt, filtert und sendet die übrigen Trägerfrequenzen aus. Das bedeutet, dass zwei Sendestationen, die einen unterschiedlichen Aufbau aufweisen, miteinander kombiniert werden können, um das erfindungsgemäße Verfahren durchzuführen. Während in der zweiten Sendestation der gemeinsame Verstärker zum Verstärken einer Vielzahl von Trägerfrequenzen und das breitbandige Filter zum Einsatz kommen, können in der ersten Sendestation beispielsweise einzelne Verstärker für die erste und die zweite Trägerfrequenz und gegebenenfalls schmalbandige Filter an deren Ausgängen vorgesehen werden. Eine Kombination der Ausgangssignale der ersten und der zweiten Sendestation erfolgt dann nach der Aussendung über deren Antennen auf der Luftschnittstelle (sogenanntes On Air Combining) .

Die Erfindung ist in beliebigen Funkkommunikationssystemen anwendbar. Vorteilhaft ist dabei insbesondere eine Anwendung in Mobilfunksystemen, bei denen heute vielfach Basisstationen zum Einsatz kommen, in denen keine gemeinsamen Verstärker zur Verstärkung mehrerer Trägerfrequenzen verwendet werden. Daher eignet sich die zuletzt genannte Weiterbildung der Erfindung zum Ausbau der vorgenannten Mobilfunksysteme, indem als erste Sendestation eine herkömmliche Basisstation eines solchen Mobilfunksystems verwendet wird und zusätzlich an den Standort der ersten Sendestation eine zweite Sendestation hinzugefügt wird, die eine Verarbeitung, gemeinsame Verstärkung und Filterung aller Trägerfrequenzen außer der ersten und der zweiten Trägerfrequenz vornimmt.

Nach einer Ausführungsform der Erfindung verwendet das Funkkommunikationssystem ein Einträgerverfahren mit einer FDMA-Komponente, bei dem zu einem betrachten Zeitpunkt jedes Signal eine der Trägerfrequenzen moduliert. Die Erfindung ist also auf alle Funkkommunikationssysteme mit FDMA-Komponente anwendbar. Bei solchen Systemen werden einzelne Verbindungen unter anderem durch unterschiedliche ihnen zugeordnete Frequenzen bzw. Frequenzbänder (entsprechend den Trägerfrequenzen) zugeordnet.

Nach einer anderen Ausführungsform der Erfindung verwendet das Funkkommunikationssystem ein Mehrträgerübertragungsverfahren, bei dem zu einem betrachten Zeitpunkt wenigstens eines der Signale mehrere der Trägerfrequenzen moduliert. Ein typisches Mehrträgerübertragungsverfahren ist beispielsweise OFDM (Orthogonal Frequency Division Multiplexing). Bei diesem wird jedes Symbol des zu übertragenden Signals gleichzeitig über mehrere Trägerfrequenzen übertragen. Ein weiteres Mehrträgerübertragungsverfahren ist das sogenannte Multi-Carrier-CDMA-Verfahren, das entweder als CDMA-OFDM-Verfahren ausgeführt sein kann oder als Frequency-Hopping- (Frequenzsprung-) CDMA-Verfahren, bei dem während der Übertragung eines Signals die verwendete Trägerfrequenz ständig gewechselt wird.

Das erfindungsgemäße Funkkommunikationssystem und die erfindungsgemäße Sendeeinrichtung für ein Funkkommunikationssystem sind mit den für die Durchführung des erfindungsgemäßen Verfahrens notwendigen Komponenten versehen.

Die Erfindung wird im Folgenden anhand von in den Figuren dargestellten Ausführungsbeispielen näher erläutert. Es zeigen:
- Figur 1: das Filtern mehrerer Trägerfrequenzen durch ein steilflankiges ideales Blockfilter F_{I},
- Figur 2: das Filtern der Trägerfrequenzen aus Figur 1 mit einem realen Blockfilter F_{R} mit flacheren Flanken,
- Figur 3: ein erstes Ausführungsbeispiel der Erfindung,
- Figur 4: ein zweites Ausführungsbeispiel der Erfindung,
- Figur 5: den Aufbau einer Sendeeinrichtung für das Ausführungsbeispiel aus Figur 3,
- Figur 6: den Aufbau einer Sendeeinrichtung für das Ausführungsbeispiel aus Figur 4 und
- Figur 7: die Realisierung einer erfindungsgemäßen Sendeeinrichtung mit zwei Sendestationen eines Mobilfunksystems.

Die Figuren 1 und 2 wurden bereits in der Beschreibungseinleitung erläutert. Gleiche Bezugszeichen in den Figuren bezeichnen gleiche Gegenstände. Obwohl die Erfindung im Folgenden anhand eines Mobilfunksystems nach dem GSM-Standard (Global System of Mobile Communication) erklärt wird, ist sie auf beliebige Funkkommunikationssysteme, die mehrere Trägerfrequenzen zur Übertragung von Signalen verwenden, anwendbar. Sie ist insbesondere auf beliebige Mobilfunksysteme anwendbar, unabhängig vom verwendeten Multiplexverfahren.

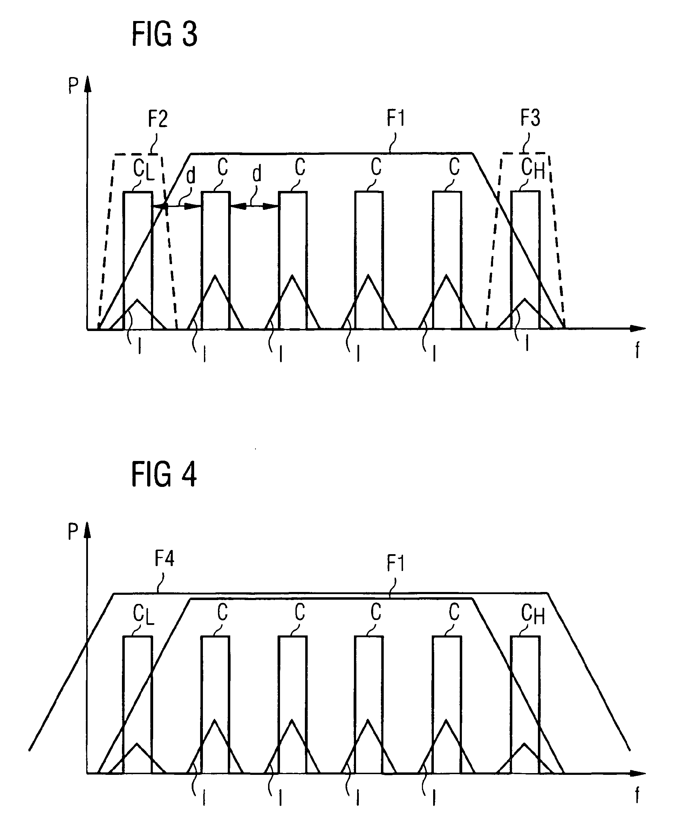

Figur 3 zeigt eine Mehrzahl von Trägerfrequenzen C, C_{L}, C_{H}, die äquidistant im Frequenzbereich angeordnet sind. Das bedeutet, dass sie gegenseitig jeweils denselben Frequenzabstand d aufweisen. In Figur 3 sind lediglich sechs Trägerfrequenzen C, C_{L}, C_{H} dargestellt, obwohl in der Praxis auch eine weitaus größere Anzahl von Trägerfrequenzen vorhanden sein kann, die durch dieselbe Sendeeinrichtung übertragen werden sollen.

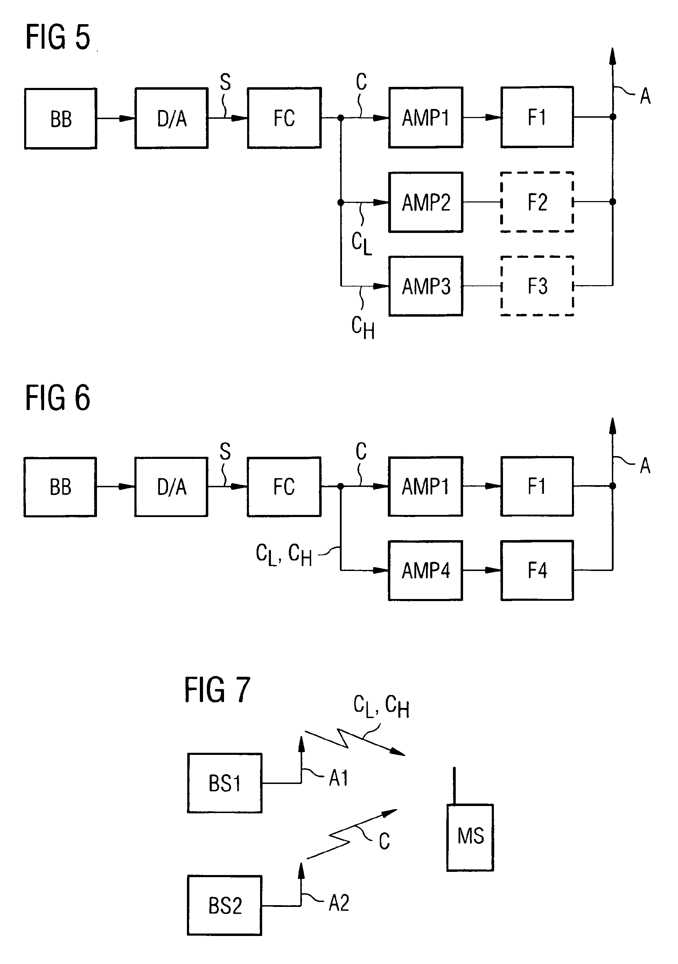

Figur 5 zeigt den Aufbau der entsprechenden Sendeeinrichtung. Sie weist eine Einrichtung BB zur Verarbeitung von zu übertragenden Signalen im Basisband auf, deren Ausgangssignale einem Digital-/Analogwandler D/A zugeführt werden. Die analogen Signale S werden einem Frequenzumsetzer FC zugeführt, in dem die Trägerfrequenzen C, C_{L}, C_{H} durch die Signale S moduliert werden. Der Ausgang des Frequenzumsetzers FC liefert getrennt die modulierten Trägerfrequenzen C, C_{L}, C_{H}. Damit die Trägerfrequenzen C, C_{L}, C_{H} jeweils separat am Ausgang des Frequenzumsetzers FC vorliegen, sind die Einrichtung BB zur Verarbeitung der Signale im Basisband, der D/A-Wandler und der Frequenzumsetzer FC jeweils so ausgeführt, dass sie die einzelnen Signale und Trägerfrequenzen separat verarbeiten können. Es kann beispielsweise für jede Trägerfrequenz eine separate Basisbandeinrichtung BB, ein separater D/A-Wandler und ein separater Frequenzumsetzer FC vorgesehen sein. Für die Erfindung ist nur wichtig, dass bei dem hier betrachteten Ausführungsbeispiel die erste Trägerfrequenz C_{L}, die gemäß Figur 3 die kleinste Frequenz aller Trägerfrequenzen C, C_{L}, C_{H} aufweist, und die zweite Trägerfrequenz C_{H}, die gemäß Figur 3 diejenige Trägerfrequenz mit der höchsten Frequenz f ist, jeweils separaten Verstärkern AMP2, AMP3 zugeführt werden. Dagegen werden alle übrigen Trägerfrequenzen C, die im Frequenzbereich zwischen der ersten Trägerfrequenz C_{L} und der zweiten Trägerfrequenz C_{H} angeordnet sind, einem gemeinsamen Verstärker AMP1 zugeführt.

Jedem der drei Verstärker AMP1, AMP2, AMP3 in Figur 5 ist jeweils ein Filter F1, F2, F3 nachgeschaltet, das zum Filtern der Ausgangssignale der Verstärker dient, bevor sie über eine Antenne A der Sendeeinrichtung abgestrahlt werden. Dabei handelt es sich bei dem ersten Filter F1 um ein breitbandiges Bandpassfilter, dessen Filtercharakteristik in Figur 3 eingetragen wurde. Da es sich um ein nicht ideales lineares Filter handelt, ist dessen Flankensteilheit relativ gering. Dies hat zur Folge, dass Intermodulationsprodukte I, die durch die Verwendung des gemeinsamen Verstärkers AMP1 zur Verstärkung der Trägerfrequenzen C entstehen, im Bereich der Flanken des Filters F1 nicht ausreichend in ihrer Leistung P gedämpft werden. Dies ist jedoch unschädlich, da an der Position dieser Intermodulationsprodukte I die erste Trägerfrequenz C_{L} und die zweite Trägerfrequenz C_{H} angeordnet sind. Da diese eine weitaus größere Leistung P aufweisen, als die Intermodulationsprodukte I, werden sie durch letzteren nicht signifikant gestört. Figur 3 zeigt auch die Charakteristik der Filter F2 und F3, die den Verstärkern AMP2, AMP3 für die erste und die zweite Trägerfrequenz C_{L}, C_{H} nachgeschaltet sind. Da diese Filter schmalbandiger sind als das breitbandige Filter F1, können sie ohne großen Aufwand mit größerer Flankensteilheit als dieses hergestellt werden. Daher werden bei der Verwendung der Verstärker AMP2, AMP3 für die erste und zweite Trägerfrequenz C_{L}, C_{H} möglicherweise entstehende Intermodulationsprodukte wirksam unterdrückt. Zu derartigen Intermodulationsprodukten kommt es bei der Verwendung von einzelnen Verstärkern zur Verstärkung der ersten und zweiten Trägerfrequenz C_{L}, C_{H} ohnehin nur, wenn ein Modulationsverfahren innerhalb des Frequenzumsetzers FC verwendet wird, bei dem wenigstens zum Teil auch eine Amplitudenmodulation der entsprechenden Trägerfrequenz erfolgt. Dies ist beispielsweise bei GMSK, das bei GSM-Mobilfunksystemen verwendet wird, nicht der Fall. GMSK ist ein reines Phasenmodulationsverfahren. Daher kann beispielsweise bei dem Einsatz der Erfindung in einem GSM-Mobilfunksystem auf den Einsatz der Filter F2, F3 zum Filtern der ersten und zweiten Trägerfrequenz C_{L}, C_{H} grundsätzlich verzichtet werden. Dies ist durch die gestrichelte Ausführungen der Filter F2, F3 in Figur 5 angedeutet. Aus dem gleichen Grund ist die Filtercharakteristik dieser Filter F2, F3 in Figur 3 nur gestrichelt eingezeichnet.

Figur 6 zeigt einen Ausschnitt eines zweiten Ausführungsbeispiels der erfindungsgemäßen Sendeeinrichtung. Die vom Frequenzumsetzer FC gelieferten modulierten Trägerfrequenzen C werden wiederum dem Verstärker AMP1 und dem Filter F1 zugeführt. In Abweichung zum Ausführungsbeispiel aus Figur 5 werden die erste Trägerfrequenz C_{L} und die zweite Trägerfrequenz C_{H} nun einem gemeinsamen Verstärker AMP4 zugeführt, dessen Ausgangssignal durch ein breitbandiges Filter F4 vor dem Aussenden über die Antenne A gefiltert wird. Figur 4 zeigt die entsprechende Darstellung im Frequenzbereich. Das Filter F4 für die erste und zweite Trägerfrequenz C_{L}, C_{H} ist noch breitbandiger als das Filter F1 für die übrigen Trägerfrequenzen C. Dies ist aber unschädlich, da aufgrund des großen Bandabstandes zwischen der ersten und der zweiten Trägerfrequenz C_{L}, C_{H} die durch die Verwendung des Verstärkers AMP4 erzeugten Intermodulationsprodukte (in Figur 4 nicht dargestellt) so große gegenseitige Abstände aufweisen, dass das Filter F4 ausreichend große Dämpfung aufweist. Daher können durch dieses Bandpassfilter F4 die entsprechenden Intermodulationsprodukte problemlos aus dem Ausgangssignal des Verstärkers AMP4 herausgefiltert werden.

Figur 7 zeigt die Realisierung der erfindüngsgemäßen Sendeeinrichtung aus den Figuren 5 bzw. 6 mittels zweier separater Sendestationen BS1, BS2, die im hier betrachteten Fall Bestandteile einer Basisstation eines zellularen Mobilfunknetzes nach dem GSM-Standard sind. Dabei enthält die erste Sendestation BS1 alle Komponenten, die zur Erzeugung und Aussendung der modulierten ersten Trägerfrequenz C_{L} und der zweiten Trägerfrequenz C_{H} notwendig sind, während die zweite Sendestation BS2 alle Komponenten enthält, die für die Erzeugung und Aussendung der modulierten Trägerfrequenzen C notwendig sind. Die modulierten, verstärkten und gegebenenfalls gefilterten Trägerfrequenzen C, C_{L}, C_{H} überlagern sich auf der Luftschnittstelle und gelangen auf diese Weise zu Mobilstationen MS, die für den Empfang der Signale S vorgesehen sind. In Figur 7 wurde lediglich eine der Mobilstationen MS dargestellt.

Als zweite Sendestation BS2 kann eine Basisstation verwendet werden, wie sie bereits zur Zeit bei den bestehenden GSM-Netzen zum Einsatz kommen. Dort ist eine relativ geringe Anzahl von Trägerfrequenzen vorgesehen, zu deren Verstärkung jeweils ein einzelner Verstärker verwendet wird. Vorteilhafterweise kann ein solches bestehendes Mobilfunknetz nun erweitert werden, indem am Standort der zweiten Sendestation BS2 die erste Sendestation BS1 ergänzt wird, die zum Übertragen der Trägerfrequenzen C mit den entsprechenden Einrichtungen, insbesondere dem gemeinsamen Verstärker AMP1 und dem breitbandigen Filter F1 (vergleiche Figuren 5 und 6) ausgestattet ist. Beide Sendestationen BS1, BS2 bilden dann gemeinsam eine logische Basisstation des Netzes, obwohl sie getrennte mechanische und elektrische Komponenten aufweisen.

Die Erfindung ermöglicht es, außerhalb des für die Trägerfrequenzen C, C_{L}, C_{H} genutzten Frequenzspektrums die Intermodulationsprodukte I auf äußerst geringe Leistungspegel zu reduzieren. Hieraus ergeben sich folgende Vorteile:
- die Sendeeinrichtung ist sehr effizient,
- es ist eine große Anzahl von Trägerfrequenzen durch die Sendeinrichtung verarbeitbar,
- die Störung anderer Frequenzen durch Intermodulationsprodukte ist minimiert und
- die Sendeeinrichtung kann durch die Verwendung gemeinsamer Verstärker und gemeinsamer Blockfilter mit geringer Flankensteilheit besonders kostengünstig hergestellt werden.

## Patentansprüche

1. Verfahren zum gleichzeitigen Übertragen von Signalen (S) durch eine Sendeeinrichtung eines Funkkommunikationssystems über mehrere Trägerfrequenzen (C, C_{L}, C_{H}), bei dem
- die Trägerfrequenzen durch die Signale moduliert werden,
- Trägerfrequenzen, die frequenzmäßig zwischen einer ersten Trägerfrequenz (C_{L}) und einer zweiten Trägerfrequenz (C_{H}) liegen, vor ihrem Senden von einem gemeinsamen Verstärker (AMP1) verstärkt werden, dessen Ausgangssignal durch ein breitbandiges Filter (F1) gefiltert wird
- und die erste Trägerfrequenz (C_{L}) und die zweite Trägerfrequenz (C_{H}) vor ihrem Senden von wenigstens einem anderen Verstärker (AMP2, AMP3; AMP4) verstärkt werden.

2. Verfahren nach Anspruch 1, bei dem
die erste Trägerfrequenz (C_{L}) und die zweite Trägerfrequenz (C_{H}) vor ihrem Senden von jeweils einem eigenen Verstärker (AMP2, AMP3) verstärkt werden.

3. Verfahren nach Anspruch 2, bei dem
die Ausgangssignale der Verstärker (AMP2, AMP3) für die erste und die zweite Trägerfrequenz durch jeweils ein schmalbandiges Filter (F2, F3) gefiltert werden.

4. Verfahren nach Anspruch 1, bei dem
die erste Trägerfrequenz (C_{L}) und die zweite Trägerfrequenz (C_{H}) vor ihrem Senden von einem Verstärker (AMP4) verstärkt werden, dessen Ausgangssignal durch ein weiteres breitbandiges Filter (F4) gefiltert wird.

5. Verfahren nach einem der vorstehenden Ansprüche, bei dem die Trägerfrequenzen (C, C_{L}, C_{H}) äquidistant zueinander angeordnet sind.

6. Verfahren nach einem der vorstehenden Ansprüche, bei dem
- die Sendeeinrichtung eine erste Sendestation (BS1) und eine zweite Sendestation (BS2) mit separaten Sendeantennen (A1, A2) aufweisen,
- die erste Sendestation (BS1) die erste und die zweite Trägerfrequenz (C_{L}, C_{H}) moduliert, verstärkt, gegebenenfalls filtert und anschließend aussendet
- und die zweite Sendestation (BS2) die übrigen Trägerfrequenzen (C) moduliert, verstärkt, filtert und aussendet.

7. Verfahren nach einem der vorstehenden Ansprüche, bei dem das Funkkommunikationssystem ein Einträgerverfahren mit einer FDMA-Komponente verwendet, bei dem zu einem betrachteten Zeitpunkt jedes Signal (S) eine der Trägerfrequenzen (C, C_{L}, C_{H}) moduliert.

8. Verfahren nach einem der vorstehenden Ansprüche, bei dem das Funkkommunikationssystem ein Mehrträgerübertragungsverfahren verwendet, bei dem zu einem betrachteten Zeitpunkt wenigstens eines der Signale (S) mehrere der Trägerfrequenzen (C, C_{L}, C_{H}) moduliert.

9. Verfahren nach einem der vorstehenden Ansprüche, bei dem das Funkkommunikationssystem ein Mobilfunksystem ist.

10. Funkkommunikationssystem
- mit einer Sendeeinrichtung zum gleichzeitigen Übertragen von Signalen (S) über mehrere Trägerfrequenzen (C, C_{L}, C_{H}),
- dessen Sendeeinrichtung Modulationsmittel (FC) zum Modulieren der Trägerfrequenzen durch die Signale aufweist,
- dessen Sendeeinrichtung einen gemeinsamen Verstärker (AMP1) aufweist zum Verstärken von Trägerfrequenzen, die frequenzmäßig zwischen einer ersten Trägerfrequenz (C_{L}) und einer zweiten Trägerfrequenz (C_{H}) liegen,
- dessen Sendeeinrichtung ein breitbandiges Filter (F1) aufweist zum Filtern des Ausgangssignals des gemeinsamen Verstärkers (AMP1)
- und dessen Sendeeinrichtung wenigstens einen anderen Verstärker (AMP2, AMP3; AMP4) aufweist zum Verstärken der ersten Trägerfrequenz (C_{L}) und der zweiten Trägerfrequenz (C_{H}).

11. Sendeeinrichtung für ein Funkkommunikationssystem zum gleichzeitigen Übertragen von Signalen (S) über mehrere Trägerfrequenzen (C, C_{L}, C_{H}),
- mit einem Modulationsmittel (FC) zum Modulieren der Trägerfrequenzen durch die Signale,
- mit einem gemeinsamen Verstärker (AMP1) zum Verstärken von Trägerfrequenzen, die frequenzmäßig zwischen einer ersten Trägerfrequenz (C_{L}) und einer zweiten Trägerfrequenz (C_{H}) liegen,
- mit einem breitbandigen Filter (F1) zum Filtern des Ausgangssignals des gemeinsamen Verstärkers (AMP1)
- und mit wenigstens einem anderen Verstärker (AMP2, AMP3; AMP4) zum Verstärken der ersten Trägerfrequenz (C_{L}) und der zweiten Trägerfrequenz (C_{H}).

## Claims

1. Method for the simultaneous transmission of signals (S) by means of a send facility of a radio communication system using a plurality of carrier frequencies (C, C_{L}, C_{H}), in which
- the carrier frequencies are modulated by the signals,
- carrier frequencies, whose frequency lies between a first carrier frequency (C_{L}) and a second carrier frequency (C_{*H*}), are amplified prior to being sent by a common amplifier (AMP1) whose output signal is filtered through a high-bandwidth filter (F1)
- and the first carrier frequency (C_{L}) and the second carrier frequency (C_{H}) are amplified by at least one other amplifier (AMP2, AMP3; AMP4) prior to being sent.

2. Method according to claim 1, in which
the first carrier frequency (C_{L}) and the second carrier frequency (C_{H}) are each amplified by a separate amplifier (AMP2, AMP3) prior to being sent.

3. Method according to claim 2, in which
the output signals from the amplifiers (AMP2, AMP3) for the first and the second carrier frequencies are filtered through a low-bandwidth filter (F2, F3) in each case.

4. Method according to claim 1, in which
the first carrier frequency (C_{L} and the second carrier frequency (C_{H}) are amplified by an amplifier (AMP4) whose output signal is filtered through a further high-bandwidth filter (F4) prior to being sent.

5. Method according to one of the preceding claims, in which the carrier frequencies (C, C_{L}, C_{H}) are arranged to be equidistant with respect to one another.

6. Method according to one of the preceding claims, in which
- the send facility has a first send station (BS1) and a second send station (BS2) with separate send antennas (A1, A2),
- the first send station (BS1) modulates, amplifies, if need be filters and then transmits the first and the second carrier frequencies (C_{L}, C_{H})
- and the second send station (BS2) modulates, amplifies, filters and transmits the remaining carrier frequencies (C).

7. Method according to one of the preceding claims, in which the radio communication system uses a single carrier method with an FDMA component, in which each signal (S) is modulating one of the carrier frequencies (C, C_{L}, C_{H}) at a considered point in time.

8. Method according to one of the preceding claims, in which the radio communication system uses a multi-carrier transmission method in which at least one of the signals (S) is modulating a plurality of the carrier frequencies (C, C_{L}, C_{H}) at a considered point in time.

9. Method according to one of the preceding claims, in which the radio communication system is a mobile radio system.

10. Radio communication system
- with a send facility for the simultaneous transmission of signals (S) using a plurality of carrier frequencies (C, C_{L}, C_{H}),
- whose send facility has modulation means (FC) for modulating the carrier frequencies by the signals,
- whose send facility has a common amplifier (AMP1) for amplifying carrier frequencies whose frequency lies between a first carrier frequency (C_{*L*}) and a second carrier frequency (C_{*H*}),
- whose send facility has a high-bandwidth filter (F1) for filtering the output signal from the common amplifier (AMP1)
- and whose send facility has at least one other amplifier (AMP2, AMP3; AMP4) for amplifying the first carrier frequency (C_{L}) and the second carrier frequency (C_{H}) .

11. Send facility for a radio communication system for the simultaneous transmission of signals (S) using a plurality of carrier frequencies (C, C_{L}, C_{H}),
- with a means of modulation (FC) for modulating the carrier frequencies by the signals,
- with a common amplifier (AMP1) for amplifying carrier frequencies whose frequency lies between a first carrier frequency (C_{L}) and a second carrier frequency (C_{H}),
- with a high-bandwidth filter (F1) for filtering the output signal from the common amplifier (AMP1)
- and with at least one other amplifier (AMP2, AMP3; AMP4) for amplifying the first carrier frequency (C_{*L*} and the second carrier frequency (C_{*H*}).

## Revendications

1. Procédé pour la transmission simultanée de signaux (S) par un dispositif d'émission d'un système de radiocommunication au moyen de plusieurs fréquences porteuses (C, C_{L}, C_{H}), dans lequel
- les fréquences porteuses sont modulées par les signaux,
- des fréquences porteuses, qui se situent au niveau de la fréquence entre une première fréquence porteuse (C_{L}) et une seconde fréquence porteuse (C_{H}), sont amplifiées avant leur émission par un amplificateur (AMP1) commun, dont le signal de sortie est filtré par un filtre (F1) à large bande
- et la première fréquence porteuse (C_{L}) et la seconde fréquence porteuse (C_{H}) sont amplifiées avant leur émission par au moins un autre amplificateur (AMP2, AMP3, AMP4).

2. Procédé selon la revendication 1, dans lequel
la première fréquence porteuse (C_{L}) et la seconde fréquence porteuse (C_{H}) sont amplifiées avant leur émission par respectivement un amplificateur propre (AMP2, AMP3).

3. Procédé selon la revendication 2, dans lequel
les signaux de sortie des amplificateurs (AMP2, AMP3) pour la première et la seconde fréquences porteuses sont filtrés par à chaque fois un filtre à bande étroite (F2, F3).

4. Procédé selon la revendication 1, dans lequel
la première fréquence porteuse (C_{L}) et la seconde fréquence porteuse (C_{H}) sont amplifiées avant leur émission par un amplificateur (AMP4), dont le signal de sortie est filtré par un autre filtre à bande large (F4).

5. Procédé selon l'une quelconque des revendications précédentes, dans lequel les fréquences porteuses (C, C_{L}, C_{H}) sont disposées de façon équidistante entre elles.

6. Procédé selon l'une quelconque des revendications précédentes, dans lequel
- le dispositif d'émission présente une première station d'émission (BS1) et une seconde station d'émission (BS2) avec des antennes d'émission séparées (A1, A2),
- la première station d'émission (BS1) module la première et la seconde fréquence porteuse (C_{L}, C_{H}) les amplifie, éventuellement les filtre et les envoie ensuite
- et la seconde station d'émission (BS2) module, amplifie, filtre et envoie les autres fréquences porteuses (C).

7. Procédé selon l'une quelconque des revendications précédentes, dans lequel le système de radiocommunication utilise un procédé à porteuse unique avec un composant FDMA, dans lequel chaque signal (S) module l'une des fréquences porteuses (C, C_{L}, C_{H}) à un moment considéré.

8. Procédé selon l'une quelconque des revendications précédentes, dans lequel le système de radiocommunication utilise un procédé de transmission à plusieurs porteuses, dans lequel au moins l'un des signaux (S) module plusieurs des fréquences porteuses (C, C_{L}, C_{H}) à un moment considéré.

9. Procédé selon l'une quelconque des revendications précédentes, dans lequel le système de radiocommunication est un système de téléphonie mobile.

10. Système de radiocommunication
- avec un dispositif d'émission pour la transmission simultanée de signaux (S) sur plusieurs fréquences porteuses (C, C_{L}, C_{H}),
- dont le dispositif d'émission présente des moyens de modulation (FC) pour la modulation des fréquences porteuses par les signaux,
- dont le dispositif d'émission présente un amplificateur commun (AMP1) pour l'amplification des fréquences porteuses, qui se situent au niveau de fréquence entre une première fréquence porteuse (C_{L}) et une seconde fréquence porteuse (C_{H}),
- dont le dispositif d'émission présente un filtre à large bande (F1) pour le filtrage du signal d'entrée de l'amplificateur commun (AMP1)
- et dont le dispositif d'émission présente au moins un autre amplificateur (AMP2, AMP3 ; AMP4) pour l'amplification de la première fréquence porteuse (C_{L}) et de la seconde fréquence porteuse (C_{H}).

11. Dispositif d'émission pour un système de radiocommunication pour la transmission simultanée de signaux (S) sur plusieurs fréquences porteuses (C, C_{L}, C_{H}),
- avec un moyen de modulation (FC) pour la modulation des fréquences porteuses par les signaux,
- avec un amplificateur commun (AMP1) pour l'amplification des fréquences porteuses, qui se situe au niveau de la fréquence entre une première fréquence porteuse (C_{L}) et une seconde fréquence porteuse (C_{H}),
- avec un filtre à large bande (F1) pour le filtrage du signal de sortie de l'amplificateur commun (AMP1)
- et avec au moins un autre amplificateur (AMP2, AMP3 ; AMP4) pour l'amplification de la première fréquence porteuse (C_{L}) et de la seconde fréquence porteuse (C_{H}).
